(19) Europäisches Patentamt
European Patent Office
Office européen des brevets

(11) **EP 2 239 974 B1**

(12) **EUROPEAN PATENT SPECIFICATION**

(45) Date of publication and mention
of the grant of the patent:
**11.11.2015  Bulletin 2015/46**

(51) Int Cl.:
*H04W 24/02* *(2009.01)*      *H04W 72/04* *(2009.01)*
*H04W 72/12* *(2009.01)*      *H04W 52/02* *(2009.01)*

(21) Application number: **10159302.8**

(22) Date of filing: **08.04.2010**

(54) **Method and network controller for reducing traffic load of multiple carriers to trigger carrier switch-off in wide area mobile networks**

Verfahren und Netzwerksteuergerät zur Verringerung der Verkehrslast von mehreren Trägern zum Auslösen einer Träger-Abschaltung in mobilen Weitverkehrsnetzen

Procédé et contrôleur de réseau pour la réduction de la charge de trafic de plusieurs porteuses pour déclencher la débranchement de porteuse dans des réseaux mobiles étendus

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority:  **08.04.2009  ES 200900960**

(43) Date of publication of application:
**13.10.2010  Bulletin 2010/41**

(73) Proprietors:
• **Vodafone Group PLC**
  **Newbury**
  **Berkshire RG14 2FN (GB)**
• **Vodafone España, S.A.U.**
  **28108 Alcobendas (ES)**
  Designated Contracting States:
  **ES**

(72) Inventors:
• **De Pasquale, Andrea**
  **E-28050 Madrid (ES)**
• **Dominguez Romero, Francisco**
  **E-28050 Madrid (ES)**

(74) Representative: **Boult Wade Tennant**
  **Verulam Gardens**
  **70 Gray's Inn Road**
  **London WC1X 8BT (GB)**

(56) References cited:
  **US-A1- 2008 175 152     US-B1- 6 360 106**
  **US-B1- 6 584 330**

**Description**

**TECHNICAL FIELD OF THE INVENTION**

The present invention has its application within the telecommunications sector and, especially, in the industrial area engaged in providing Radio Access Networks (RANs) with elements of cellular infrastructures such as Radio Network Controllers (RNCs) and Base Stations (Node Bs) for wireless communications systems supporting 3G or beyond 3G technologies (i.e., WCDMA, HSDPA, LTE, WiMax, etc.).

More particularly, the invention described herein relates to a method and a RNC for dynamically reducing the traffic in packet switching (PS) domain of wide area mobile networks and then switching traffic load between carriers for energy saving in base stations.

**BACKGROUND OF THE INVENTION**

In UMTS telecommunications networks, the mobile Base Stations (Node Bs) have their transmission power amplifiers operating with a minimum power, especially at night, with possible low traffic scenarios in a RNC region with many cells, these power amplifiers continue to operate with the minimum power level as they have to transmit the common channels.

The rising importance of energy costs in the Operator OPEX and energy savings for a climate change issue calls for solutions to decrease the network expenditure in situation of low traffic. For example, at night, when low traffic situation often occurs as explained before, the output power of the aforementioned transmission power amplifiers could be reduced to a predefined value. By monitoring and comparing further parameters like cell load information, Service Request information, Admission and congestion control, power level of other permanent control channels (CCCHs), the pilot channel power level and the number of cells fulfilling the present conditions, it is possible to control and change the operational mode of these power amplifiers.

Solutions for radio-frequency (RF) carrier switch-off have been investigated and implemented by the industry. One way of carrier switch-off is by softly decreasing the transmission power of the pilot channel. US 6,360,106 describes another example of monitoring the transceiver means of base stations in order to switched one of the transceivers into an energy saving mode when the load of the remaining one goes down a threshold.

On the other hand, the tendency of users to stay connected 24 hours a day to download videos and audio files keeps the traffic levels always high, which makes more and more difficult (even at night) to find situations in which 3G (or in the future, Long Term Evolution) carriers can be switched off.

At the same time, the rise of flat tariffs and the demand for high speed data highly decrease the revenues per bit, whilst a consistent part of the growing traffic is made of purely Best Effort Traffic.

Therefore, an effective technique for power savings at base stations as well as guarantee of QoS in 3G and beyond 3G is needed.

US 6,584,330 describes adaptive power management for a node of a cellular telecommunications network. Traffic load per carrier is measured. After it is determined that it is desired to turn off a carrier, it is determined whether the traffic currently on the carrier to be removed can be moved to another carrier.

US 2008/175152 describes service differentiating and overload indication for downlink.

**SUMMARY OF THE INVENTION**

In accordance with the present invention, there is provided a method of reducing traffic load, as described in claim 1.

The present invention serves to solve the aforesaid problem by providing a radio network controller (RNC) with a method for reducing the transmitted packet traffic in order to create suitable conditions for a second or third carrier switch-off in 3G, so that energy savings can be realised by switching off the useless carrier.

For this purpose, traffic load is measured by the RNC in both uplink (UL) and downlink (DL) constantly for every carrier which radio spectrum is currently split into. Taking into account these measurements and the different active parameters of Quality of Service (QoS) profiles, the RNC can actively decrease the current traffic in the PS domain (packet traffic) and gets a traffic level situation to trigger an algorithm for switching-off carriers. Also, previously switched-off radio carriers can be switched-on by the RNC if the load measurements indicate an increasing of the PS and/or the CS (call switching) traffic. In any case, the RNC is capable for managing the transfer of load among activated (current switched-on) radio carriers.

In addition, the proposed method performed by the RNC can be implemented (and can complement) on top of any other existing RF carrier switch-off algorithm provided in the RNC to save power in the Node-Bs under its control.

Thus, the invention aims to artificially reduce the actual packet traffic in a way which is suited to today's reality of continuous Internet connections provided via flat tariffs over HSPA (High Speed Packet Access).

In the context of this invention, a radio carrier is, for example, one UMTS channel of 5 MHz used in a cell.

In the context of this invention and applying it for each PS connection over HSPA, the following parameters are introduced:

- Scheduling Priority Indicator (SPI), which is function of the QoS parameters. In HSDPA (High Speed Downlink Packet Access), the traffic handling priority (THP) and, optionally, the allocation retention priority (ARP) and traffic class (TC) parameters are mapped to SPI in RNC (which normally stores them as table values) to determine scheduling priority per transmission time interval (TTI). This SPI is sent from the RNC to the Node-B, together with the corresponding payload, within every data packet. The SPI consists of 4 bits; hence, 16 different priorities can be distinguished. Although the Node B Application Part (NBAP) standard (3GPP TS 25.433) specifies these priorities, it is vendor-specific how the different priorities are handled by the Node-B.

- Vulnerability indicators of traffic to carrier switch-off. Each SPI is marked as "Vulnerable to Carrier switch-off (V-CSOff)" or "non-Vulnerable to Carrier switch-off (NV-CSOff)" to distinguish SPI values associated to certain traffic depending on whether the transmission of said certain traffic is affected or not by the switching-off of one or more carriers. For example, voice calls, VoIP and streaming services can be classified as non-vulnerable to carrier switch-off.

- Minimum DL/UL nominal bit-rate. These rates (throughput) are configurable for V-CSOff as well as NV-CSOff traffic, establishing a minimum transmission bit-rate in downlink and also in uplink.

An aspect of the invention refers to a method for reducing traffic load of a plurality of carriers which are active (switched-on) in a wide area mobile network for transmission of Packet Switched (PS) and Circuit Switched (PS) traffic, wherein the CS traffic load and the PS traffic load values are measured or estimated for both downlink and uplink transmission in every N carrier (N≥ 2). The method comprises a step of evaluation of the suitability of the measured traffic loads for being carried by N-1 carriers (instead of all the N carriers) and a step of reconfiguration of the traffic load towards the N-1 carriers, which remain activated, from one of the carriers which can be ultimately switched-off.

The evaluation of the suitability of the N-1 radio carriers for carrying the measured values of traffic load, in downlink (DL) and uplink (UL), comprises the following steps:

- associating a certain traffic, which has a scheduling priority indicator (the standardised SPI) assigned to, with a label (NV-CSOff, V-CSOff) indicating a degree of vulnerability of said traffic to its transmission in case that at least one of the N carriers is switched off;
- assigning to said traffic an alternative scheduling priority indicator (SPI') in accordance to the previously assigned SPI and the associated label;
- establishing a minimum bit-rate for transmission of traffic both in downlink and in uplink,
- adding the values of CS traffic load and PS traffic load, measured in DL, corresponding to PS traffic with an associated label indicating zero degree of vulnerability (NV-CSOff), and the minimum bit-rate for transmission in DL of traffic with a label indicating a certain non-null degree of vulnerability (V-CSOff);
- comparing the result of adding the values in DL with a traffic load supportable by the remaining N-1 switched-on radio carriers in DL in case that at least one radio carrier is switched off;
- adding the values of CS traffic load and PS traffic load, measured in UL, corresponding to PS traffic with an associated label indicating zero degree of vulnerability (NV-CSOff), and the minimum bit-rate for transmission in UL of traffic with a label indicating a certain non-null degree of vulnerability (V-CSOff);
- comparing the result of adding the values in UL with a traffic load supportable by the remaining N-1 switched-on radio carriers in downlink in case that at least one radio carrier is switched off.

The reconfiguration of the traffic load from one radio carrier towards the remaining switched-on radio carriers comprises transferring the traffic load from said at least one radio carrier to the remaining switched-on radio carriers. The radio carrier which is chosen by the RNC to be switched off can be, preferably, the one for which the measured traffic load value (in DL and UL) before said reconfiguration is less than the measured traffic load of the remaining (N-1) switched-on radio carriers.

Another aspect of the invention deals with a radio network controller (RNC) comprising processing means for performing the method described before.

A last aspect of the invention deals with a computer program comprising program code means which execute the method described before, when loaded into processing means of the radio network controller defined above.

A major advantage of present invention is that the energy consumption of Node Bs, specially caused by flat tariffs for packet traffic, is reduced.

## DESCRIPTION OF THE DRAWINGS

To complete the description that is being made and with the object of assisting in a better understanding of the characteristics of the invention, in accordance with a preferred example of practical embodiment thereof, accompanying said description as an integral part thereof, is a set of drawings wherein, by way of illustration and not restrictively, the following has been represented:

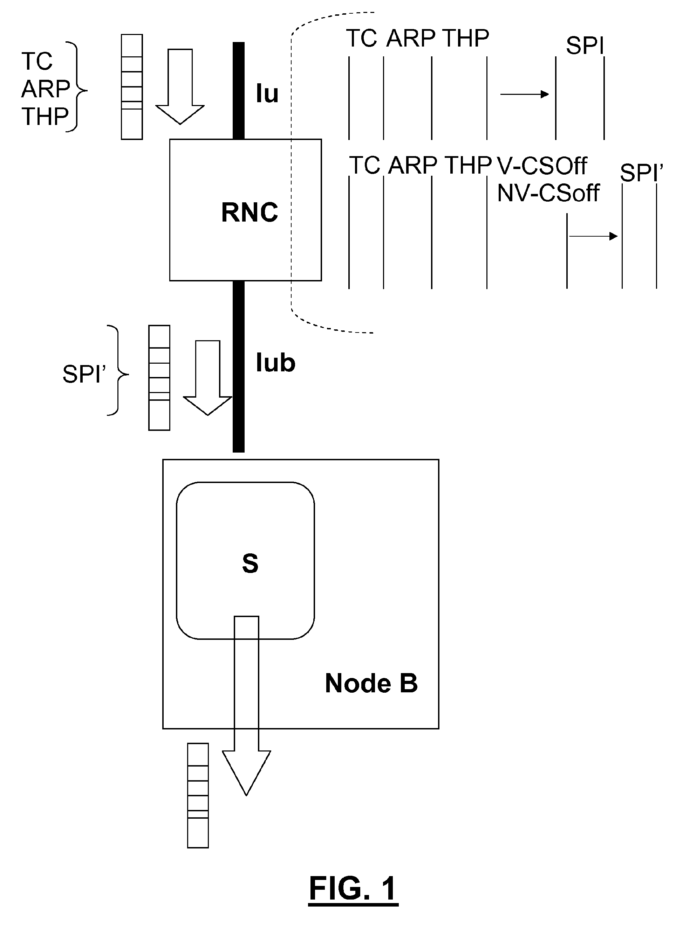

Figure 1. - It shows a schematic representation of the use by a Node B of the scheduling priority indicator determined by a Radio Network Controller, according to a preferred embodiment of the invention.

## DETAILED DESCRIPTION OF THE INVENTION

Figure 1 shows a radio network controller (RNC) implementing the method of the invention. The example illustrates the method for downlink but the same is applicable to uplink. This radio network controller (RNC) normally receives data packets, which have a traffic handling priority (THP), an allocation retention priority (ARP) and a traffic class (TC) assigned to, over Iu interface in downlink and sends through Iub interface the data packets with an assigned scheduling priority indicator (SPI') to a radio base station (Node B), which in turn runs a HSDPA scheduler (S) using this scheduling priority indicator (SPI').

Conventionally, this radio network controller (RNC) can use the standard scheduling priority indicator (SPI), determined by the values of the traffic handling priority (THP), the allocation retention priority (ARP) and the traffic class (TC) parameters assigned to the received data packet. In this conventional mode of operation, the radio network controller (RNC) sends the data packet being the assigned scheduling priority indicator SPI' = SPI.

Instead, when executing the method here proposed, the radio network controller (RNC) sends the data packet with an alternative scheduling priority indicator. Said alternative scheduling priority indicator is defined by associating the standard scheduling priority indicator (SPI) with a label, which can be V-CSOff indicating the transmission of this data packet is vulnerable to carrier switch-off or NV-CSOff in case that the transmission of this data packet is not vulnerable to any carrier switch-off. Then, the radio network controller (RNC) sends the data packet to the HSDPA scheduler (S) of the radio base station (Node B), the data packet including the assigned scheduling priority indicator SPI' = SPI + V-CSOff/ NV-CSOff label.

The radio network controller (RNC) estimates or measures constantly, for example over Y seconds, traffic load of the radio carriers provided for data packet transmission in both UL and DL. Traffic load is a function of the measurements over time on DL transmission power, DL code utilization, UL Interference and the percentage of not served Radio Access Bearer requests.

Assume a simple network scenario with two carriers initially activated or switched-on. In the operation mode of executing a preferred embodiment of the invention, the radio network controller (RNC) performs the following steps:

A) IDENTIFY SITUATION FOR CARRIER-SWITCH OFF CREATION

A1) At predetermined instants, for example every X seconds, the radio network controller (RNC) checks the following condition:

Average measured CS traffic load can fit into the DL load of a single carrier + a Load DL transmission power configurable margin.

The same is checked in UL.

A2) Every X seconds, the radio network controller (RNC) checks using the average measured values whether:

CS traffic load DL + HSDPA PS Traffic load NV-CSOff + minimum DL nominal bit-rate for V-CSOff

is lower than
the DL supportable load with a single activated carrier + a configurable downlink margin

Same check is done for the UL with the interference as a capacity resource.

If both conditions A1 and A2 are verified for both DL and UL, then the radio network controller (RNC) triggers the following step B.

B) CREATE LOAD SUITABLE FOR CARRIER SWITCH-OFF & TRANSFER LOAD TO THE SWITCHED-ON CARRIERS

Generally speaking, there can be initially N radio carriers per cell and the RNC can decide to switch-off one or more carriers and transfer their load to the carriers which remain activated. In order to create the conditions to switch-off the carrier, the first event is to reconfigure every call over the carrier to be switched-off into the rest N-1 carriers. The condition to do this is to maintain the QoS for the NV-CSOff and to ensure the minimum nominal bit rate for both UL and DL.

In the case of two carriers, moving the HSDPA traffic from both carriers to just one results in decreasing the maximum available power for DL transmission. As a consequence, the HSDPA scheduler must now handle more throughput with less available power&code resources -UL interference for HSUPA-, and the scheduler uses the SPI-based priorities in order to assign resources. Hence, the throughput of the users with a SPI' having a label V-CSOff is reduced.

CS Traffic on the carrier to be switched-off is also transferred to the active carrier. The carrier selected to be switched-off is the least loaded.

Inter-frequency HO procedures are used in order to move the traffic from a second carrier to the first one.

C) RUN CARRIER SWITCH-OFF ALGORITHMS

Carrier switch-off algorithms are called. This kind of algorithms checks whether there is no traffic in the second, third... carrier and then make a switch-off of the cell, i.e. the common channels are not transmitted and the neighbouring definitions of the neighbouring cells are updated accordingly.

D) TRIGGER TO CARRIER SWITCH-ON

Since traffic load on each carrier is estimates or measured periodically so that, every X seconds, , the value of CS traffic load DL + HSDPA PS Traffic load NV-CSOff + minimum DL nominal bit-rate for V-CSOff can be checked, the radio network controller (RNC) is capable of detecting any of the following situations:

i) Increase of CS traffic load
ii) Increase of the NV-CSOf traffic load, caused by higher throughput or by an increase in the number of users in the scheduler
iii) Increase of the V-CSOff traffic load, caused by an increase of the number of users in the scheduler

In case that these three events or any of them happen, the radio network controller (RNC) can trigger the re-activation of a carrier, or various carriers, previously switched-off. One or more carriers are switched-on again only if the following condition is verified either in the downlink or in the uplink. The condition to be checked every X seconds by the radio network controller (RNC) is:

$$\text{(CS traffic load DL + HSDPA PS Traffic load NV-CSOff + minimum DL nominal bit-rate for V-CSOff) is lower or equal than (DL supportable load with 1 carrier – configurable downlink Margin).}$$

Same condition is checked for the Uplink.

If the condition is true for any of the UL or DL, the radio network controller (RNC) triggers the carrier switched-on.

Note that in this text, the term "comprises" and its derivations (such as "comprising", etc.) should not be understood in an excluding sense, that is, these terms should not be interpreted as excluding the possibility that what is described and defined may include further elements, steps, etc.

**Claims**

1. Method for reducing traffic load of N radio carriers, N >= 2, which are switched-on in a wide area mobile network, comprising:

for every N radio carrier, measuring a value of Circuit Switched traffic load and a value of Packet Switched traffic load, both in downlink and in uplink;

evaluating the suitability of carrying the measured traffic load values in N-1 radio carriers;

associating a certain traffic, which has an assigned scheduling priority indicator (SPI), with a label indicating a degree of vulnerability of said traffic to its transmission in case that at least one of the N radio carriers is switched off,

assigning to said traffic an alternative scheduling priority indicator (SPI') in accordance to the previously assigned scheduling priority indicator (SPI) and the associated label;

triggering a scheduler to schedule the traffic using the alternative scheduling priority indicator (SPI'); and

reconfiguring the traffic load from one of the radio carriers towards the remaining N-1 radio carriers.

2. Method according to claim 1, wherein the evaluation of the suitability of carrying the measured traffic load in N-1 radio carriers comprises:

establishing a minimum bit-rate for transmission of traffic both in downlink and in uplink,

adding the values of Circuit Switched traffic load and Packet Switched traffic load, measured in downlink, corresponding to Packet Switched traffic with an associated label indicating zero degree of vulnerability, and the minimum bit-rate for transmission in downlink of traffic with a label indicating a certain non-null degree of vulnerability;

comparing the result of adding the values in downlink with a traffic load supportable by the remaining N-1 switched-on radio carriers in downlink in case that at least one radio carrier is switched off;

adding the values of Circuit Switched traffic load and Packet Switched traffic load, measured in uplink, corresponding to Packet Switched traffic with an associated label indicating zero degree of vulnerability, and the minimum bit-rate for transmission in uplink of traffic with a label indicating a certain non-null degree of vulnerability; and

comparing the result of adding the values in uplink with a traffic load supportable by the remaining N-1 switched-on radio carriers in uplink in case that at least one radio carrier is switched off.

3. Method according to claim 2, wherein

if the result of adding the values in downlink is lower than a configurable downlink margin plus the traffic load supportable by the remaining N-1 switched-on radio carriers in downlink in case that at least one radio carrier is switched off, and

if the result of adding the values in uplink is lower than a configurable uplink margin plus the traffic load supportable by the remaining N-1 switched-on radio carriers in uplink in case that at least one radio carrier is switched off,

at least one radio carrier is switched off after reconfiguring the traffic load of said at least one radio carriers towards the remaining switched-on radio carriers.

4. Method according to claim 3, wherein reconfiguring the traffic load from one radio carrier towards the remaining switched-on radio carriers comprising transferring the traffic load from said at least one radio carrier to the remaining switched-on radio carriers by using inter-frequency handover.

5. Method according to any of claims 3-4, wherein the at least one radio carrier which is switched off has, before reconfiguring the traffic load, less traffic load than the remaining switched-on radio carriers.

6. Method according to any of claims 2-5, wherein

if the result of adding the values in downlink is lower or equal than the traffic load supportable by the remaining switched-on radio carriers in downlink in case that at least one radio carrier is switched off minus a configurable downlink margin

or

if the result of adding the values in uplink is lower or equal than the traffic load supportable by the remaining switched-on radio carriers in uplink in case that at least one radio carrier is switched off minus a configurable uplink margin,

at least one previously switched off radio carrier is switched-on.

7. Method according to any of claims 2 to 6, wherein the steps of comparison are performed at predetermined intervals.

8. Radio network controller **characterized by** comprising processing means configured to implement the method set out in any previous claim.

9. Radio network controller according to claim 8, further comprising triggering means for triggering a HSPA scheduler in a Node B to schedule the traffic using the alternative scheduling priority indicator (SPI').

10. A computer program product comprising program code means which, when loaded into processing means of a radio network controller, make said program code means execute the method according to any of claims 1-7.


**Patentansprüche**

1. Verfahren zum Reduzieren von Verkehrslast von N Funkträgern, N >= 2, die in einem mobilen Weitverkehrsnetz eingeschaltet sind, das Folgendes beinhaltet:

Messen, für jeden der N Funkträger, eines Wertes für leitungsgeschaltete Verkehrslast und eines Wertes für paketgeschaltete Verkehrslast sowohl in der Downlink als auch in der Uplink;
Beurteilen der Eignung des Führens der gemessenen Verkehrslastwerte in N-1 Funkträgern;
Assoziieren eines bestimmten Verkehrs mit einem zugeordneten Planungsprioritätsindikator (SPI) mit einem Etikett, das einen Verwundbarkeitsgrad des genannten Verkehrs bei seiner Übertragung anzeigt, falls wenigstens einer der N Funkträger abgeschaltet wird,
Zuordnen eines alternativen Planungsprioritätsindikators (SPI') gemäß dem zuvor zugeordneten Planungsprioritätsindikator (SPI) und dem assoziierten Etikett zu dem genannten Verkehr;
Auslösen eines Schedulers zum Planen des Verkehrs anhand des alternativen Planungsprioritätsindikators (SPI'); und
Umkonfigurieren der Verkehrslast von einem der Funkträger auf die übrigen N-1 Funkträger.

2. Verfahren nach Anspruch 1, wobei die Beurteilung der Eignung zum Führen der gemessenen Verkehrslast in N-1 Funkträgern Folgendes beinhaltet:

Feststellen einer Mindestbitrate für die Übertragung von Verkehr auf der Downlink und der Uplink,
Addieren der Werte von leitungsgeschalteter Verkehrslast und paketgeschalteter Verkehrslast, gemessen in der Downlink, entsprechend paketgeschaltetem Verkehr mit einem assoziierten Etikett, das einen Verwundbarkeitsgrad von null anzeigt, und der Mindestbitrate für Übertragung in der Downlink von Verkehr mit einem Etikett, das einen bestimmten Verwundbarkeitsgrad von ungleich null anzeigt;
Vergleichen des Ergebnisses des Addierens der Werte in der Downlink mit einer Verkehrslast, die von den verbleibenden N-1 eingeschalteten Funkträgern in der Downlink unterstützt werden kann, falls wenigstens ein Funkträger abgeschaltet wird;
Addieren der Werte von leitungsgeschalteter Verkehrslast und paketgeschalteter Verkehrslast, gemessen in der Uplink, entsprechend paketgeschaltetem Verkehr mit einem assoziierten Etikett, das einen Verwundbarkeitsgrad von null anzeigt, und der Mindestbitrate für Übertragung in der Uplink von Verkehr mit einem Etikett, das einen bestimmten Verwundbarkeitsgrad von ungleich null anzeigt; und
Vergleichen des Ergebnisses des Addierens der Werte in der Uplink mit einer Verkehrslast, die von den übrigen N-1 eingeschalteten Funkträgern in der Uplink unterstützt werden kann, falls wenigstens ein Funkträger abgeschaltet wird.

3. Verfahren nach Anspruch 2, wobei
wenn das Ergebnis des Addierens der Werte in der Downlink kleiner ist als eine konfigurierbare Downlink-Marge plus der Verkehrslast, die von den übrigen N-1 zugeschalteten Funkträgern in der Downlink unterstützt werden kann, falls wenigstens ein Funkträger abgeschaltet wird, und
wenn das Ergebnis des Addierens der Werte in der Uplink kleiner ist als eine konfigurierbare Uplink-Marge plus der Verkehrslast, die von den übrigen N-1 eingeschalteten Funkträgern in der Uplink unterstützt werden kann, falls dieser wenigstens eine Funkträger abgeschaltet wird,
wenigstens ein Funkträger nach dem Unkonfigurieren der Verkehrslast des genannten wenigstens einen Funkträgers auf die übrigen eingeschalteten Funkträger abgeschaltet wird.

4. Verfahren nach Anspruch 3, wobei das Umkonfigurieren der Verkehrslast von einem Funkträger auf die übrigen eingeschalteten Funkträger das Übertragen der Verkehrslast von dem genannten wenigstens einen Funkträger auf die übrigen eingeschalteten Funkträger mittels einer Inter-Frequenz-Übergabe beinhaltet.

5. Verfahren nach einem der Ansprüche 3-4, wobei der wenigstens eine Funkträger, der abgeschaltet wird, vor dem Umkonfigurieren der Verkehrslast weniger Verkehrslast hat als die übrigen eingeschalteten Funkträger.

6. Verfahren nach einem der Ansprüche 2-5, wobei
wenn das Ergebnis des Addierens der Werte in der Downlink gleich oder kleiner als die Verkehrslast ist, die von den übrigen eingeschalteten Funkträgern in der Downlink unterstützt werden kann, falls wenigstens ein Funkträger abgeschaltet wird, minus einer konfigurierbaren Downlink-Marge,
oder
wenn das Ergebnis des Addierens der Werte in der Uplink gleich oder kleiner als die Verkehrslast ist, die von den übrigen eingeschalteten Funkträgern in der Uplink unterstützt werden kann, falls wenigstens ein Funkträger abgeschaltet wird, minus einer konfigurierbaren Uplink-Marge,
wenigstens ein zuvor abgeschalteter Funkträger eingeschaltet wird.

7. Verfahren nach einem der Ansprüche 2 bis 6, wobei die Vergleichsschritte in vorbestimmten Intervallen ausgeführt werden.

8. Funknetzwerksteuerung, **dadurch gekennzeichnet, dass** sie Verarbeitungsmittel umfasst, die zum Implementieren des Verfahrens nach einem vorherigen Anspruch konfiguriert sind.

9. Funknetzsteuerung nach Anspruch 8, die ferner Auslösemittel zum Auslösen eines HSPA-Schedulers in einem Knoten B umfasst, um den Verkehr mit dem alternativen Planungsprioritätsindikator (SPI') zu planen.

10. Computerprogrammprodukt, das Programmcode umfasst, der, wenn er in Verarbeitungsmittel einer Funknetzsteuerung geladen wird, bewirkt, dass der genannte Programmcode das Verfahren nach einem der Ansprüche 1-7 ausführt.


## Revendications

1. Procédé de réduction de la charge de trafic de N porteuses radio, N >= 2, activées dans un réseau mobile étendu, comprenant :

pour chaque N porteuse radio, la mesure d'une valeur de charge de trafic commuté par circuits et d'une valeur de charge de trafic commuté par paquets, à la fois en liaison descendante et en liaison montante ;
l'évaluation de l'adéquation de l'acheminement des valeurs de charge de trafic mesurées dans N-1 porteuses radio ;
l'association d'un certain trafic, auquel est attribué un indicateur de priorité d'ordonnancement (SPI), à une étiquette indiquant un degré de vulnérabilité dudit trafic à sa transmission au cas où au moins l'une des N porteuses radio est désactivée,
l'attribution audit trafic d'un autre indicateur de priorité d'ordonnancement (SPI') en fonction de l'indicateur de priorité d'ordonnancement (SPI) précédemment attribué et de l'étiquette associée ;
le déclenchement d'un ordonnanceur pour ordonnancer le trafic en utilisant l'autre indicateur de priorité d'ordonnancement (SPI') ; et
la reconfiguration de la charge de trafic de l'une des porteuses radio vers les N-1 porteuses radio restantes.

2. Procédé selon la revendication 1, dans lequel l'évaluation de l'adéquation de l'acheminement des valeurs de charge de trafic mesurées dans N-1 porteuses radio comprend :

l'établissement d'un débit binaire minimum pour la transmission du trafic à la fois en liaison descendante et en liaison montante,
l'ajout des valeurs de la charge de trafic commuté par circuits et de la charge de trafic commuté par paquets, mesurées en liaison descendante, correspondant à un trafic commuté par paquets ayant une étiquette associée indiquant un degré de vulnérabilité nul, et du débit binaire minimum pour la transmission en liaison descendante d'un trafic ayant une étiquette indiquant un certain degré de vulnérabilité non nul ;
la comparaison du résultat de l'ajout des valeurs en liaison descendante à une charge de trafic pouvant être prise en charge par les N-1 porteuses radio activées restantes en liaison descendante au cas où au moins une porteuse radio est désactivée ;
l'ajout des valeurs de la charge de trafic commuté par circuits et de la charge de trafic commuté par paquets, mesurées en liaison montante, correspondant à un trafic commuté par paquets ayant une étiquette associée indiquant un degré de vulnérabilité nul, et du débit binaire minimum pour la transmission en liaison montante d'un trafic ayant une étiquette indiquant un certain degré de vulnérabilité non nul ; et
la comparaison du résultat de l'ajout des valeurs en liaison montante à une charge de trafic pouvant être prise en charge par les N-1 porteuses radio activées restantes en liaison montante au cas où au moins une porteuse radio est désactivée.

3. Procédé selon la revendication 2, dans lequel
si le résultat de l'ajout des valeurs en liaison descendante est inférieur à une marge de liaison descendante configurable plus la charge de trafic pouvant être prise en charge par les N-1 porteuses radio activées restantes en liaison descendante au cas où au moins une porteuse radio est désactivée, et
si le résultat de l'ajout des valeurs en liaison montante est inférieur à une marge de liaison montante configurable plus la charge de trafic pouvant être prise en charge par les N-1 porteuses radio activées restantes en liaison montante au cas où au moins une porteuse radio est désactivée,
au moins une porteuse radio est désactivée après la reconfiguration de la charge de trafic de ladite au moins une porteuse radio vers les porteuses radio activées restantes.

4. Procédé selon la revendication 3, dans lequel la reconfiguration de la charge de trafic d'une porteuse radio vers les porteuses radio activées restantes comprend le transfert de la charge de trafic de ladite au moins une porteuse radio vers les porteuses radio activées restantes en utilisant un transfert inter-fréquences.

5. Procédé selon l'une quelconque des revendications 3-4, dans lequel l'au moins une porteuse radio qui est désactivée a, avant la reconfiguration de la charge de trafic, moins de charge de trafic que les porteuses radio activées restantes.

6. Procédé selon l'une quelconque des revendications 2-5, dans lequel si le résultat de l'ajout des valeurs en liaison descendante est inférieur ou égal à la charge de trafic pouvant être prise en charge par les porteuses radio activées restantes en liaison descendante au cas où au moins une porteuse radio est désactivée moins une marge en liaison descendante configurable
ou
si le résultat de l'ajout des valeurs en liaison montante est inférieur ou égal à la charge de trafic pouvant être prise en charge par les porteuses radio activées restantes en liaison montante au cas où au moins une porteuse radio est désactivée moins une marge en liaison montante configurable,
au moins une porteuse radio désactivée antérieurement est activée.

7. Procédé selon l'une quelconque des revendications 2 à 6, dans lequel les étapes de comparaison sont exécutées à des intervalles prédéterminés.

8. Contrôleur de réseau radio **caractérisé en ce qu'**il comprend un moyen de traitement configuré pour mettre en oeuvre le procédé présenté dans n'importe quelle revendication précédente.

9. Contrôleur de réseau radio selon la revendication 8, comprenant en outre un moyen de déclenchement pour déclencher un ordonnanceur HSPA dans un Noeud B pour ordonnancer le trafic en utilisant l'autre indicateur de priorité d'ordonnancement (SPI').

10. Produit de programme informatique comprenant un moyen de code de programme qui, lorsqu'il est chargé dans un moyen de traitement d'un contrôleur de réseau radio, amène ledit moyen de code de programme à exécuter le procédé selon l'une quelconque des revendications 1 à 7.

TC
ARP
THP

TC ARP THP                    SPI

Iu

TC ARP THP V-CSOff            SPI'
           NV-CSoff

RNC

SPI'

Iub

S

Node B

**FIG. 1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6360106 B
- US 6584330 B
- US 2008175152 A